(19) Europäisches Patentamt
European Patent Office
Office européen des brevets

(11) Numéro de publication: **0 443 909 B1**

(12) **FASCICULE DE BREVET EUROPEEN**

(45) Date de publication du fascicule du brevet: **30.08.95**
(51) Int. Cl.⁶: **G01N 21/00**, G01N 21/64

(21) Numéro de dépôt: **91400343.9**

(22) Date de dépôt: **12.02.91**

(54) **Procédé et système de mesure optique de la température de l'air par excitation laser, notamment en avant d'un aéronef.**

(30) Priorité: **22.02.90 FR 9002180**

(43) Date de publication de la demande:
**28.08.91 Bulletin 91/35**

(45) Mention de la délivrance du brevet:
**30.08.95 Bulletin 95/35**

(84) Etats contractants désignés:
**DE GB**

(56) Documents cités:
**EP-A- 0 283 047**

**APPLIED OPTICS vol. 27, no. 2, 15 janvier 1988, pages 365-378, Washington, US; P. ANDRESEN et al.: "Laser-induced fluorescence with tunable excimer lasers as a possible method for instanteneous temperature-field measurements at high pressures: checks with an atmospheric flame"**

**IEEE JOURNAL OF OUANTUM ELECTRONICS vol. OE-20, no. 5, mai 1984, pages 454-457; G. MASSEY et al.: "Feasibility of Measuring Temperature and Density Fluctuations in Air Using Laser-Induced O2 Fluorescence"**

(73) Titulaire: **SEXTANT AVIONIOUE S.A.**
**5/7 rue Jeanne Braconnier**
**Parc Tertiaire**
**F-92366 Meudon la Forêt Cédex (FR)**

(72) Inventeur: **Fima, Henri**
**Lotissement le Vercors**
**F-26120 Malissard (FR)**

(74) Mandataire: **Bloch, Gérard et al**
**2, square de l'Avenue du Bois**
**F-75116 Paris (FR)**

EP 0 443 909 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé et un système de mesure optique à distance de la température de l'air, notamment en avant d'un aéronef, dans une zone non perturbée par son déplacement.

La température de l'air est l'un des paramètres qui sont affichés sur des instruments de bord d'un aéronef et qui servent, pour le contrôle et le pilotage de l'aéronef, à l'élaboration puis à l'affichage de certains des paramètres de l'aéronef, comme par exemple sa vitesse par rapport à l'air, le nombre de Mach, sa vitesse par rapport au sol, son altitude, son réglage de puissance.

Il était donc a priori intéressant d'inventer une mesure optique de température éliminant les inconvénients des mesures locales classiques, à l'aide d'un thermomètre, soumises à des perturbations aérodynamiques qu'il faut ensuite corriger.

On connait déjà des procédés de mesure de température de l'air basés sur la fluorescence de l'oxygène induite par laser. Pour leur mise en oeuvre, on utilise soit un laser ArF (argon fluor), de 193 nm de longueur d'onde, soit un laser KrF (krypton fluor), de 248 nm de longueur d'onde, pour exciter des bandes chaudes, à niveau vibrationnel élevé, du domaine de Schumann-Runge de l'oxygène.

D'après la demanderesse, ces procédés connus n'ont été utilisés qu'en laboratoire pour étudier la répartition de température dans des flammes et des écoulements d'air chaud. Mais ces procédés ne sont applicables qu'en absorption faible, c'est-à-dire quand on peut linéariser le facteur exponentiel d'atténuation du faisceau laser en fonction de la distance. Alors, il y a proportionnalité entre les intensités de fluorescence et les populations des états inférieurs des transitions excitées, ce qui permet de calculer la température sans connaitre la densité d'oxygène. En pratique, cela revient à limiter la distance de mesure à une dizaine de centimètres. Pour calculer là température en avant d'un aéronef, dans une zone non perturbée, soit à une dizaine de mètres en avant de l'aéronef, ces procédés connus sont inapplicables en raison de la forte atténuation du faisceau. Les signaux de fluorescence seraient des fonctions très complexes de la température, de la densité et de la distribution spectrale du laser et le calcul serait quasiment impossible.

Comme faisant partie de l'état de la technique, on peut citer l'article "Laser-induced fluorescence with tunable excimer lasers as a possible method for instantaneous field measurements at high pressure : checks with an atmospherie flame, Andresen et al., 15 January 1988, vol. 27, n 2, Applied optics". Ce document traite de mesures de température de flammes, par excitation de OH, $O_2$ ou $H_2O$ par un laser KrF et enseigne plus particulièrement d'exciter deux transitions de la molécule considérée à l'aide de deux impulsions laser décalées en fréquence et de déterminer le rapport des intensités de fluorescence, par l'intermédiaire des populations des niveaux inférieurs des deux transitions, qui ne dépend que de la température.

On peut aussi citer l'article "Quantitative imaging of temperature fields in air using planar laser-induced fluorescence of $O_2$, Lee et al., February 1987, vol. 12, n 2, Optics letters". Ce document traite de la réalisation d'images bidimensionnelles de la température dans des écoulements d'air chaud. Il enseigne de focaliser un laser ArF à bande large, non accordé, sur le volume de mesure et d'observer la fluorescence. Plusieurs raies d'absorption de l'oxygène sont excitées et la fluorescence globale, dans des conditions d'absorption faible, peut être modelisée en fonction de la température, à un coefficient multiplicateur près, proportionnel à la densité. Moyennant une calibration absolue, une carte thermique, avec une très bonne résolution spatiale, peut être réalisée.

On peut encore citer l'article "Feasibility of measuring temperature and density fluctuations in air using laser-induced $O_2$ fluorescence, Massey and Lemon, May 1984, vol. QE-20, n 5, IEEE Journal of Quantum electronics". Ce document traite de la mesure de fluctuations de température et de densité, spatiales ou temporelles, et enseigne d'utiliser un laser ArF, avec une raie moyennement affinée, pour exciter deux raies adjacentes P et R de la bande $[X_0, B_4]$ de l'oxygène. En absorption faible, on peut relier la variation relative de fluorescence observée à la variation relative de température. Pour calculer cette variation relative de température, on utilise deux impulsions laser décalées en fréquence, excitant deux paires de raies $P(J_1)$, $R(J_1+2)$ et $P(J_2)$, $R(J_2+2)$, respectivement.

Enfin, on peut citer l'article "Proposed single-pulse two-dimensional temperature and density measurements of oxygen and air, Miles et al., March 1988, vol. 13, n 3, Optics letters". Ce document traite du même sujet que le précédent document et enseigne d'utiliser un laser ArF accordé sur une transition UV de l'oxygène et d'observer la diffusion Rayleigh et la fluorescence. A absorption faible et à température inférieure à 500 K, l'intensité de la rétrodiffusion Rayleigh est proportionnelle à la densité et indépendante de la température et l'intensité de fluorescence dépend de la densité mais aussi de la température. Le rapport des intensités de fluorescence et de diffusion Rayleigh ne dépend que de la température et peut être modelisé.

La présente invention vise donc, d'abord, à proposer un procédé de mesure optique de la température de l'air, à "grande" distance.

A cet effet, la présente invention concerne un procédé de mesure optique à distance de la température de l'air par excitation laser, dans lequel, à l'aide d'un générateur laser et par excitation de transitions de bandes d'énergie du domaine de Schumann-Runge de l'oxygène moléculaire, on provoque la fluorescence de l'oxygène, on mesure les intensités de la fluorescence induite dans deux bandes différentes, on détermine le rapport de ces intensités et on en déduit la température, caractérisé par le fait qu'on excite, sur une tranche de profondeur importante, deux raies d'absorption qui au moins se recouvrent et qui appartiennent respectivement à deux bandes différentes de Schumann-Runge de l'oxygène et que la raie d'émission du générateur laser a une largeur très faible par rapport à celle des raies d'absorption et sa fréquence centrale est ajustée pour être au voisinage des maxima des deux raies d'absorption.

Avantageusement,

- on utilise un laser ArF et on excite les deux bandes [$X_0$, $B_4$] et [$X_1$, $B_7$],
- on excite les raies R19 de la bande [$X_0$, $B_4$] et P21 de la bande [$X_1$, $B_7$],
- on mesure la fluorescence des bandes de fluorescence [$B_4$, $X_8$] et [$B_7$, $X_9$] de longueurs d'onde respectives de 249 nm et 247 nm.

De préférence, on détermine la température de l'air en avant d'un aéronef dans une tranche d'air sans perturbations aérodynamiques et on en déduit des paramètres de vol de l'aéronef qu'on utilise pour son pilotage.

La présente invention concerne également un système de mesure pour la mise en oeuvre du procédé de mesure de l'invention, caractérisé par le fait qu'il comporte un générateur laser émettant un rayonnement de raie très fine de manière à exciter deux raies d'absorption, qui au moins se recouvrent et qui appartiennent respectivement à deux bandes différentes de Schumann-Runge de l'oxygène, la fréquence centrale de la raie d'émission du générateur laser étant ajustée pour être sensiblement au voisinage des maxima des deux raies d'absorption, une optique d'émission du rayonnement d'excitation, une optique de réception du rayonnement de fluorescence, des moyens de séparation des deux énergies de fluorescence, des détecteurs accordés respectivement sur les fréquences de fluorescence et un module de traitement et calcul.

L'invention sera mieux comprise à l'aide de la description suivante des principes théoriques sur lesquels se fonde l'invention, de la mise en oeuvre préférée du procédé de l'invention ainsi que de la forme de réalisation préférée du système de l'invention, en référence aux dessins annexés, sur lesquels

- la figure 1 est une représentation schématique de niveaux d'energies électroniques, vibratoires et rotatoires d'une molécule;
- la figure 2 est une représentation de deux raies d'absorption et d'une raie d'excitation laser;
- la figure 3 est une représentation schématique du système de mesure de température de l'invention;
- la figure 4 est une représentation spatiotemporelle de la tranche d'air sondée et
- la figure 5 est une représentation de bandes d'absorption de Schumann-Runge dans la bande d'accrochage du laser ArF.

L'énergie globale d'une molécule est la somme de son énergie électronique, de son énergie vibratoire et de son énergie rotatoire. Cette énergie globale, depuis un état électronique fondamental, de plus basse énergie, peut occuper une série de niveaux excités différents. A chaque niveau d'énergie électronique, fondamental et excité, sont associés plusieurs niveaux rapprochés d'énergie vibratoire à chacun desquels sont associés plusieurs niveaux encore plus rapprochés d'énergie rotatoire correspondant à plusieurs valeurs du nombre quantique de rotation J. L'énergie électronique et vibratoire d'une molécule passe à un niveau supérieur notamment par excitation, c'est-à-dire par absorption de photons, par exemple issus d'un rayonnement laser. L'énergie électronique et vibratoire d'une molécule passe à un niveau inférieur notamment par fluorescence, c'est-à-dire par émission spontanée de photons.

Deux niveaux vibratoires distincts $E_i$ et $E_j$ d'énergie électronique et vibratoire définissent une bande, d'absorption ou de fluorescence, regroupant l'ensemble des transitions possibles entre deux niveaux d'énergie rotatoire associés respectivement à ces deux niveaux d'énergie électronique et vibratoire. A une transition $E_i(J_k)$, $E_j(J_l)$ correspond une raie spectrale, théoriquement de fréquence déterminée

$$\nu = \frac{E_j(J_l) - E_i(J_k)}{h}$$

h étant la constante de Planck.

En réalité, du fait de l'agitation thermique (effet Doppler), et des collisions, une raie, courbe représentative du coefficient d'absorption $\alpha$ en fonction de la pulsation $\omega = 2\pi\nu$ , est élargie en fréquence (pulsation).

Considérons deux raies d'absorption $R[Eo(J_o), E_1(J_1)]$ et $R'[E'_0(J'_0), E'_1(J'_1)]$ presque confondues, qui se recouvrent donc partiellement, et qui appartiennent respectivement à deux bandes d'absorption différentes $(E_0, E_1)$ et $(E'_0, E'_1)$ dont les écarts d'énergie entre centres $E_1$-$E_0$ et $E'_1$-$E'_0$ sont voisins, selon le schéma des niveaux d'énergie de la figure 1.

Grossièrement, on peut écrire

$$E_1(J_1) - E_0(J_0) = E'_1(J'_1) - E'_0(J_0)$$
$$= h\frac{\omega_0}{2\pi}$$
$$= \hbar\,\omega_0$$

Considérons également les bandes de fluorescence $(E_1, E_2)$ et $(E'_1, E'_2)$ telles que les probabilités de transition radiative de $E_1$ à $E_2$ et de $E'_1$ à $E'_2$ soient fortes.

Considérons encore un rayonnement d'excitation L de pulsation $\omega_o$ proche des maxima des deux raies d'absorption considérées R et R', selon le dessin de la figure 2. Devant s'agir d'un rayonnement de largeur spectrale très faible, on considèrera, comme source d'excitation, un générateur laser émettant un faisceau parallèle monochromatique de raie très fine.

Les raies d'absorption R(R') ont pour équation

$$\alpha(\omega) = N\,S\,(T)\,g\,(\omega)$$

dans laquelle

- N est le nombre total de molécules absorbantes, par unité de volume,
- T est la température,
- S (T) est l'intensité de la raie et
- g ($\omega$) est le profil normalisé de la raie, tel que

$$\int \alpha d\omega = N\,S\,(T).$$

g ($\omega$) est généralement fonction également de la température T et de la pression P.

Le rapport des intensités de fluorescence, c'est-à-dire le rapport des nombres de photons de fluorescence reçus sur les deux bandes, est égal au rapport des coefficients d'absorption $\frac{\alpha'}{\alpha}$ multiplié par le rapport des rendements de fluorescence $\frac{\eta'}{\eta}$ . Le rendement de fluorescence est le rapport entre le nombre de molécules dont l'énergie est passée du niveau haut $E_1$ au niveau intermédiaire désexcité $E_2$ par émission spontanée de photons et le nombre total de molécules excitées au niveau haut $E_1$ par le rayonnement laser. Les rendements de fluorescence aussi dépendent notamment de la température T et de la pression P.

o

o o

Considérons maintenant les bandes de Schumann-Runge de l'oxygène moléculaire diatomique qui possède des transitions dipolaires électriques exploitables pour l'excitation et la fluorescence. Elles présentent en l'occurence des particularités intéressantes (Atlas of the Schumann-Runge absorption bands of $O_2$ in the wavelength region 175-205 nm, Yoshino, Freeman, Parkinson-J. Phys. Chem. Ref. Data, vol. 13, n 1, 1984).

Ces bandes regroupent les transitions de l'état électronique fondamental $^3\Sigma_g^-$ , noté X, à l'état électronique excité $^3\Sigma_u^-$ noté B.

La fréquence d'excitation correspondant à la transition entre les deux niveaux origines, respectivement de repos et d'excitation, à énergie vibratoire nulle (état vibratoire fondamental), est égale à 49 357 $cm^{-1}$, correspondant à une longueur d'onde de 203 nm. Le spectre des bandes de Schumann-Runge s'étend,

dans sa partie discrète, sur tout le domaine de l'ultraviolet, jusqu'à la longueur d'onde minimale de 175 nm. Dans cette zone, il existe le laser à excimère argon-fluor (ArF) accordable dans la bande 192,8 nm-193,6 nm de longueur d'onde. Au-delà, s'étend le continuum de Schumann-Runge, avec une forte section efficace d'absorption $\frac{\alpha}{N}$ (la dimension de $\frac{\alpha}{N}$ est $m^2$, puisque la dimension de $\alpha$, inverse d'une longueur d'onde, est $m^{-1}$ et celle de N est $m^{-3}$).

L'élargissement des raies spectrales des bandes de Schumann-Runge est en fait dû à un phénomène qui domine aussi bien l'effet Doppler que les collisions moléculaires. Il s'agit de la prédissociation des molécules de l'état excité B attribuée à un couplage avec un autre état électronique répulsif. La probabilité de prédissociation, Q par unité de temps, est très élevée et elle est indépendante de la température et de la pression. Q dépend en fait des nombres quantiques définissant le niveau d'énergie.

Il en résulte que le profil normalisé $g(\omega)$ des raies des bandes de Schumann-Runge ne dépend pratiquement pas de la température ni de la pression. De même, les rendements de fluorescence ne dépendent pas non plus de la température ni de la pression, la probabilité de prédissociation étant nettement supérieure à la probabilité de transition par collision avec changement d'état vibratoire.

Le rapport des intensités de fluorescence émises sur deux bandes, résultant de l'excitation des deux raies, quasiment confondues évoquées plus haut, par le générateur laser de raie très fine également évoqué plus haut, dans le cas de deux bandes de Schumann-Runge, ne dépend donc que de la température T et est proportionnel au rapport des intensités des raies

$$\frac{S'(T)}{S(T)}$$

Le facteur exponentiel d'atténuation du faisceau laser est rigoureusement éliminé. L'intensité d'une raie d'absorption étant proportionnelle, comme le coefficient d'absorption, à la population relative du niveau inférieur de la transition, le rapport des intensités de fluorescence est donc sensiblement égal à

$$K e^{-\frac{E'_0(J'_0) - E_0(J_0)}{kT}}$$

k étant la constante de Boltzmann et K une constante. $E'_0$ et $E_0$ étant deux niveaux vibratoires différents, l'écart d'énergie $E'_0$-$E_0$ est grand devant kT, si bien que ce rapport est très sensible à la température. La mesure de ce rapport d'intensités de fluorescence permet donc de calculer la température.

La température de l'air peut être ainsi déterminée par des mesures optiques à distance, ce qui présente un avantage dans le domaine aéronautique pour la détermination des paramètres air d'un aéronef, comme le nombre de Mach, la vitesse du son dépendant de la température. On s'affranchit par conséquent des corrections qui sont nécessaires quand on procède à des mesures locales qui sont soumises à des perturbations aérodynamiques.

En résumé, à l'aide d'un laser, notamment ArF, on peut illuminer l'air ambiant sur une tranche de profondeur relativement importante pour exciter, dans deux bandes différentes de Schumann-Runge, deux raies d'absorption "identiques", c'est-à-dire presque confondues, par rapport auxquelles la raie d'émission laser est très fine.

S'agissant de ces bandes particulières, pour lesquelles la probabilité de prédissociation de l'état excité est déterminante, le rapport des coefficients d'absorption ne dépend que de la température et les rendements de fluorescence sont indépendants de la température et de la pression. Le rapport des énergies de fluorescence (rapport des nombres de photons de fluorescence) dans deux bandes différentes et résultant des transitions d'absorption ne dépend donc que de la température. Il suffit de le mesurer pour déterminer cette température.

Ayant décrit les principes théoriques sur lesquels s'appuye l'invention, celle-ci peut maintenant être abordée.

Système de mesure

Le système de mesure, représenté sur la figure 3, comporte, ici, un générateur laser ArF à excimère 1, ici encore, de longueur d'onde sensiblement égale à 193 nm, émettant dans l'espace, par l'intermédiaire de deux miroirs de réflexion 2 et 3, un faisceau d'excitation 4, une lentille 5 de réception du faisceau de fluorescence 6 résultant de l'excitation des molécules d'air, une lentille de focalisation 7, en l'espèce, une lame 8 de réflexion du faisceau de fluorescence 6, un réseau 9, sur lequel le faisceau 6 se réfléchit selon un angle de réflexion dépendant de la fréquence, pour séparer les deux énergies de fluorescence 14, 15, deux détecteurs 10, 11 recevant respectivement les deux énergies de fluorescence, par l'intermédiaire de deux lentilles de focalisation 12, 13, et un module de traitement et calcul 16.

Toutes les optiques sont de qualité ultraviolet, par exemple en silice UV.

Les détecteurs 10, 11 comportent, chacun, un tube à vide photomultiplicateur à effet photovoltaïque, en tant qu'amplificateur, et un filtre convenablement accordé.

Procédé de mesure

La durée de vie des états excités $E_1$ et $E'_1$ est très courte, inférieure à 10 ps, du fait de la prédissociation. La fluorescence d'un volume donné ne se produit, par conséquent, que pendant le passage d'une impulsion laser de durée $\tau$. En conséquence, le volume de mesure peut être délimité de manière temporelle par la durée de l'impulsion laser, ce qui permet avantageusement de simplifier le système optique.

L'émetteur 1 et les récepteurs 10, 11 étant pratiquement à un même endroit origine 0, le diagramme d'émission et de fluorescence peut être représenté en fonction de deux variables, le temps t et la distance d de mesure, ou de sondage, le long du faisceau laser 4 (figure 4). Sur cette figure a été représentée la trajectoire spatiotemporelle $\tau$ d'une impulsion laser de durée $\tau$.

A chaque instant t, supérieur ou égal à $\tau$ , la fluorescence reçue provient d'une tranche spatiale AB de profondeur c $\frac{\tau}{2}$ , c étant la vitesse de la lumière.

Pendant la durée d'analyse $\tau'$ la tranche d'observation instantanée se déplace, à la vitesse c, de AB en CD, c'est-à-dire d'une distance c $\frac{\tau'}{2}$ . La tranche spatiale globale observée,

$$\left\{B\left(c\,\frac{t-\tau}{2}\right) - C\left(c\,\frac{t+\tau'}{2}\right)\right\}$$

a une profondeur de

$$c\,\frac{\tau+\tau'}{2}$$

Pendant cette durée d'analyse $\tau'$, on mesure par les détecteurs 10 et 11, les énergies de fluorescence 14, 15 dans deux bandes différentes de Schumann-Runge.

Plus précisément, les photomultiplicateurs 10, 11 délivrent au module 16 deux courants $I_1$ et $I_2$ qui sont intégrés pendant des durées dépendant de la tranche d'air sondée et de son éloignement, avant que les deux intégrales ne soient calculées et leur rapport déterminé.

Comme indiqué ci-dessus, le rapport

$$Ke^{-\frac{E'_0-E_0}{k\,T}}$$

des signaux détectés, mis en mémoire dans le module 16, permet de calculer la température T. Naturellement, le système de mesure aura, au préalable, été étalonné.

Cas pratique de mesure

Il n'est donné vraiment qu'à titre d'exemple.

L'analyse de fluorescence est effectuée après l'impulsion laser de durée $\tau = 10$ ns, entre les instants t = 70 ns et $t + \tau' = 100$ ns ( $\tau' = 30$ ns). La tranche d'air sondée, s'étend donc entre deux plans, passant par B et C en référence à la figure 4, et distants de 9 m et 15 m, respectivement.

Il n'est procédé au calcul des deux intégrales

$$J_1 = \int_t^{t+\tau'} I_1 \, dt \qquad J_2 = \int_t^{t+\tau'} I_2 \, dt$$

Du rapport

$$\frac{J_1}{J_2} = K e^{-\frac{E_0' - E_0}{kT}}$$

on tire T.

La température est en fait déterminée après chaque impulsion laser.

Choix du couple des raies d'absorption

L'examen des bandes de Schumann-Runge de l'oxygène montre qu'il existe quelques couples de raies d'absorption confondues pouvant servir à la mesure de la température.

Dans la bande d'accrochage du laser ArF (figure 5), il existe un certain nombre de raies appartenant notamment aux deux bandes

$$[X_0, B_4]$$
$$[X_1, B_7]$$

les indices 0, 1, 4, 7 des états électroniques X, B représentant des numéros de niveau vibratoire (nombre quantique vibrationnel) associé à ces états électroniques. Il s'agit des raies

P17 de la bande $X_0$, $B_4$

R23 de la bande $X_1$, $B_7$

et

R19 de la bande $X_0$, $B_4$

P21 de la bande $X_1$, $B_7$

P et R, dans les bandes considérées, correspondent aux branches pour lesquelles la différence entre les moments orbitaux des deux états B et X est égale à -1 et +1, respectivement.

Les raies du premier couple sont confondues à mieux que 0,1 $cm^{-1}$ et celles du second couple ne sont distantes que de 2 $cm^{-1}$ environ.

La largeur de raie, due à la prédissociation, est d'environ 3,4 $cm^{-1}$ pour la bande $[X_0, B_4]$ et de 1,4 $cm^{-1}$ pour la bande $[X_1, B_7]$ : les raies considérées se recouvrent bien. Le choix du couple de raies doit être déterminé par la distance de sondage pour optimiser le rapport signal/bruit. Pour une distance d'une dizaine de mètres, le coefficient d'absorption des raies de la bande $[X_0, B_4]$ est trop fort pour une pression de 1 bar et il vaut mieux alors retenir le couple de raies décalées de 2 $cm^{-1}$ et ajuster la fréquence du laser au centre de la raie de la bande $[X_1, B_7]$.

Bandes de fluorescence

Les bandes de fluorescence [B, X] issues des niveaux $B_4$ et $B_7$ doivent être, d'une part, intenses et, d'autre part, faiblement absorbées. En outre, les longueurs d'onde de fluorescence doivent être choisies

supérieures à 240 nm pour être extérieures au continuum d'Herzberg de l'oxygène (Herzberg continuum cross section of oxygen, Cheung et al. Canadian Journal of Physics, vol. 62, pages 1752-1762, 1984).

Toutes les bandes de fluorescence intéressantes tombent cependant dans la bande de Hartley de l'ozone qui constitue un continuum d'absorption s'étendant jusqu'à 360 nm. Le maximum d'absorption se produit à 255 nm et la concentration d'ozone est maximale vers 20 km d'altitude, avec un coefficient d'absorption $\alpha_{max} = 5.10^{-3} m^{-1}$. Il a été constaté que deux bandes de fluorescence intenses, parmi d'autres, voisines du maximum d'absorption de l'ozone, étaient notamment utilisables. Il s'agit des bandes $= 5.10^{-3} m^{-1}$. Il a été constaté que deux bandes de fluorescence intenses, parmi d'autres, voisines du maximum d'absorption de l'ozone, étaient notamment utilisables. Il s'agit des bandes

$$[B_4, X_8]$$
$$[B_7, X_9]$$

de longueurs d'ondes respectives 249 nm et 247 nm.

Dans le système de l'invention tel que décrit en référence à la figure 3, les détecteurs 10, 11 sont accordés sur les fréquences correspondantes qui sont séparées par le réseau 9. L'écart d'absorption de l'ozone étant faible, son influence sur le rapport des énergies de fluorescence transmises est négligeable entre 0 et 30 km d'altitude. En effet, on peut démontrer facilement que, si l'écart maximal du coefficient d'absorption est de $5.10^{-4} m^{-1}$, la variation relative maximale du rapport de transmission est de $5.10^{-3}$ pour une distance de 10 m. A une telle variation correspond une variation relative de température dix fois plus faible. A une température de 300 °K, la variation maximale de température est donc de 0,15 °K.

Il faut noter que les performances du procédé et du système de mesure de l'invention sont limitées par le bruit photonique de détection. Mais avec, par exemple, les distances de mesure considérées plus haut, une énergie d'impulsion laser de 0,01 J, une surface d'optique de réception de 100 $cm^2$ et une moyenne de mesures effectuée sur dix tirs, entre 0 et 20 km d'altitude, les incertitudes efficaces de calcul dues au bruit photonique sont inférieures à 0,5 K.

Le procédé de mesure qui vient d'être décrit s'appuyait sur un couple de raies d'absorption dans la bande d'accrochage du laser ArF.

La demanderesse a cherché, en dehors de la bande de ce laser, tous les couples de raies confondues utilisables sur deux bandes $[X_{v1}, B_{V1}]$ et $[X_{v2}, B_{V2}]$.

Les nombres quantiques vibrationnels $v_1$ et $v_2$ de l'état fondamental doivent être égaux à 0 ou 1, pour que la population des états correspondants, et donc l'absorption, soient suffisantes. Le nombre $v'_1$ a été limité à 4, car les raies des bandes $[X_0, B_{V'>4}]$ sont trop absorbantes pour une distance de 10 m. Les valeurs de v′ égales à 0 et 2 ont été éliminées, car, pour elles, le taux de prédissociation n'est pas assez fort pour que le profil de la raie soit indépendant de la pression. Ces restrictions étant posées, deux autres couples de raies confondues ont pu être trouvés. Il s'agit des raies

R25 de la bande $X_0$, $B_3$
R 9 de la bande $X_1$, $B_5$

à une longueur d'onde $\lambda = 196{,}2$ nm,

R21 de la bande $X_0$, $B_1$
R 5 de la bande $X_1$, $B_3$

à une longueur d'onde $\lambda = 200{,}9$ nm,

ce dernier couple étant toutefois moins intéressant car les coefficients d'absorption sont faibles. Pour le premier couple, on pourrait utiliser un laser à alexandrite, après multiplication de la fréquence par quatre. Dans ce dernier cas, les bandes de fluorescence issues des niveaux $B_3$, $B_5$ qui pourraient être utilisées seraient $[B_3, X_8]$ et $[B_5, X_{10}]$.

## Revendications

1. Procédé de mesure optique à distance de la température de l'air par excitation laser, dans lequel, à l'aide d'un générateur laser et par excitation de transitions de bandes d'énergie vibratoire au domaine de Schumann-Runge de l'oxygène moléculaire, on provogue la fluorescence de l'oxygène, on mesure les intensités de la fluorescence induite dans deux bandes différentes, on détermine le rapport de ces intensités et on en déduit la température, caractérisé par le fait qu'on excite, sur une tranche de profondeur importante

$$\left(c\,\frac{\tau+\tau'}{2}\right)$$

deux raies d'absorption (R, R'), qui au moins se recouvrent et qui appartiennent respectivement à deux bandes différentes de Schumann-Runge de l'oxygène et que la raie d'émission (L) du générateur laser a une largeur très faible par rapport à celle des raies d'absorption et sa fréquence centrale

$$\left(\frac{\omega_0}{2\pi}\right)$$

est ajustée pour être sensiblement au voisinage des maxima des deux raies d'absorption (R, R').

**2.** Procédé de mesure selon la revendication 1, dans lequel, avant de déterminer le rapport des intensités de fluorescence, on sépare en fréquence les énergies de fluorescence induites par l'excitation laser.

**3.** Procédé de mesure selon l'une des revendications 1 et 2, dans lequel on calcule la température après chaque impulsion laser.

**4.** Procédé de mesure selon l'une des revendications 1 à 3, dans lequel on choisit le couple de raies d'absorption en fonction de la distance à laquelle on veut mesurer la température.

**5.** Procédé de mesure selon l'une des revendications 1 à 4, dans lequel on excite des bandes de Schumann-Runge de nombre quantique vibrationnel de l'état fondamental 0 ou 1.

**6.** Procédé de mesure selon la revendication 5, dans lequel on utilise un laser ArF et on excite les deux bandes $[X_0, B_4]$ et $[X_1, B_7]$.

**7.** Procédé de mesure selon la revendication 6, dans lequel on excite les raies P17 de la bande $[X_0, B_4]$ et R23 de la bande $[X_1, B_7]$.

**8.** Procédé de mesure selon la revendication 6, dans lequel on excite les raies R19 de la bande $[X_0, B_4]$ et P21 de la bande $[X_1, B_7]$.

**9.** Procédé de mesure selon la revendication 8, dans lequel on ajuste la fréquence du générateur laser au centre de la raie P21 de la bande $[X_1, B_7]$.

**10.** Procédé de mesure selon l'une des revendications 6 à 9, dans lequel on mesure les intensités de fluorescence de longueur d'onde supérieure à 240 nm.

**11.** Procédé de mesure selon la revendication 10, dans lequel on mesure la fluorescence des bandes de fluorescence $[B_4, X_8]$ et $[B_7, X_9]$ de longueurs d'onde respectives de 249 nm et 247 nm.

**12.** Procédé de mesure selon la revendication 5, dans lequel on excite les raies d'absorption R25 de la bande $[X_0, B_3]$ et R9 de la bande $[X_1, B_5]$.

**13.** Procédé de mesure selon l'une des revendications 1 à 12, dans lequel on détermine la température de l'air en avant d'un aéronef dans une tranche d'air sans perturbations aérodynamiques et on en déduit des paramètres de vol de l'aéronef qu'on utilise pour son pilotage.

**14.** Système de mesure pour la mise en oeuvre du procédé de l'une des revendications 1 à 13, comportant un générateur laser (1) émettant un rayonnement de raie très fine de manière à exciter deux raies d'absorption (R,R'), qui au moins se recouvrent et qui appartiennent respectivement à deux bandes différentes de Schumann-Runge de l'oxygène, la fréquence centrale

$$\left(\frac{\omega_0}{2\pi}\right)$$

de la raie d'émission du générateur laser étant ajustée par être sensiblement au voisinage des maxima des deux raies d'absorption (R, R'), une optique (2, 3) d'émission du rayonnement d'excitation, une optique (5, 7, 8) de réception du rayonnement de fluorescence, des moyens (9) de séparation des deux énergies de fluorescence, des détecteurs (10, 11) accordés respectivement sur les fréquences de fluorescence et un module (16) de traitement et calcul.

**15.** Système selon la revendication 14, dans lequel le générateur laser (1) est un générateur laser ArF à excimère émettant un faisceau parallèle monochromatique de raie très fine centrée sur une longueur d'onde sensiblement égale à 193 nm.

**Claims**

**1.** Process for remote optical measurement of the temperature of the air by laser excitation, in which with the aid of a laser generator and by excitation of vibratory energy band transitions of the Schumann-Runge area of molecular oxygen, the oxygen is made to fluoresce, the intensities of the fluorescence induced in two different bands are measured, the ratio between these intensities is determined and the temperature is deduced therefrom, characterised in that two absorption lines (R, R') are excited over a slice of great depth

$$\left(c\,\frac{\tau+\tau'}{2}\right),$$

which lines at least overlap and belong respectively to two different Schumann-Runge bands of oxygen, and that the emission line (L) of the laser generator is very narrow with respect to the width of the absorption lines and its central frequency

$$\left(\frac{\omega_0}{2\pi}\right)$$

is set to be substantially close to the maxima of the two absorption lines (R, R').

**2.** Measuring process according to claim 1, in which, before determining the ratio between the fluorescence intensities, the induced fluorescence energies are separated in frequency by laser excitation.

**3.** Measuring process according to either of claims 1 and 2, in which the temperature is calculated after each laser pulse.

**4.** Measuring process according to any of claims 1 to 3, in which the pair of absorption lines is chosen according to the distance at which it is desired to measure the temperature.

**5.** Measuring process according to any of claims 1 to 4, in which the Schumann-Runge bands of the vibrational quantal number of the basic state 0 or 1 are excited.

**6.** Measuring process according to claim 5, in which a laser ArF is used and the two bands $[X_0, B_4]$ and $[X_1, B_7]$ are excited.

**7.** Measuring process according to claim 6, in which the lines P17 of the band $[X_0, B_4]$ and R23 of the band $[X_1, B_7]$ are excited.

**8.** Measuring process according to claim 6, in which the lines R19 of the band $[X_0, B_4]$ and P21 of the band $[X_1, B_7]$ are excited.

**9.** Measuring process according to claim 8, in which the frequency of the laser generator is set to the middle of the line P21 of the band $[X_1, B_7]$.

**10.** Measuring process according to any of claims 6 to 9, in which the fluorescence intensities of wavelengths greater than 240nm are measured.

**11.** Measuring process according to claim 10, in which the fluorescence of the fluorescence bands [$B_4$, $X_8$] and [$B_7$, $X_9$] of respective wavelengths of 249nm and 247nm are measured.

**12.** Measuring process according to claim 5, in which the absorption lines R25 of the band [$X_0$, $B_3$] and R9 of the band [$X_1$, $B_5$] are excited.

**13.** Measuring process according to any of claims 1 to 12, in which the temperature of the air in front of an aircraft is determined in a slice of air without aerodynamic disturbance and the flight parameters of the aircraft which are used to pilot it are deduced therefrom.

**14.** Measuring system to implement the process of any of claims 1 to 13, comprising a laser generator (1) emitting an extremely fine line radiation so as to excite two absorption lines (R, R') which at least overlap and which belong respectively to two different Schumann-Runge bands or oxygen, the middle frequency

$$\left(\frac{\omega_0}{2\pi}\right)$$

of the emission line of the laser generator being set to be substantially close to the maxima of the two absorption lines (R, R'), optics (2, 3) to emit excitation radiation, optics (5, 7, 8) to receive the fluorescence radiation, means (9) to separate the two fluorescence energies, detectors (10, 11) tuned respectively to the fluorescence frequencies and a processing and calculating module (16).

**15.** System according to claim 14, in which the laser generator (1) is an excimer laser generator ArF emitting a monochromatic parallel beam with an extremely fine line centred on a wavelength substantially equal to 193nm.

**Patentansprüche**

**1.** Verfahren zur optischen Fernmessung der Lufttemperatur durch Laseranregung, bei dem mittels eines Lasergenerators und durch Anregung der Übergänge von Schwingungsenergiebanden des Schumann-Runge-Bereichs des molekularen Sauerstoffs die Fluoreszenz des Sauerstoffs hervorgerufen wird, die Intensität der induzierten Floreszenz in zwei verschiedenen Banden gemessen wird, das Verhältnis dieser Intensitäten bestimmt und daraus die Temperatur abgeleitet wird, dadurch gekennzeichnet, daß man auf einem Abschnitt von beträchtlicher Tiefe

$$\left(c\,\frac{\tau+\tau'}{2}\right)$$

zwei Absorptionslinien (R, R') anregt, die sich zumindest überdecken und die jeweils zu zwei verschiedenen Schumann-Runge-Banden des Sauerstoffs gehören, und daß die Emissionslinie (L) des Lasergenerators eine sehr geringe Breite im Vergleich zu derjenigen der Absorptionslinien aufweist und ihre Mittenfrequenz

$$\left(\frac{\omega_0}{2\pi}\right)$$

so eingestellt ist, daß sie im wesentlichen in der Nähe der Maxima der zwei Absorptionslinien (R, R') liegt.

**2.** Meßverfahren nach Anspruch 1, bei dem vor der Bestimmung des Verhältnisses der Fluoreszenzintensitäten die durch die Laseranregung induzierten Fluoreszenzenergien nach der Frequenz getrennt werden.

3. Meßverfahren nach einem der Ansprüche 1 und 2, bei dem nach jedem Laserimpuls die Temperatur berechnet wird.

4. Meßverfahren nach einem der Ansprüche 1 bis 3, bei dem das Absorptionslinienpaar in Abhängigkeit von der Entfernung, in der man die Temperatur messen möchte, gewählt wird.

5. Meßverfahren nach einem der Ansprüche 1 bis 4, bei dem Schumann-Runge-Banden mit der Schwingungsquantenzahl des Grundzustands 0 oder 1 angeregt werden.

6. Meßverfahren nach Anspruch 5, bei dem ein ArF-Laser verwendet wird und die beiden Banden $[X_0, B_4]$ und $[X_1, B_7]$ angeregt werden.

7. Meßverfahren nach Anspruch 6, bei dem die Linien P17 der Bande $[X_0, B_4]$ und R23 der Bande $[X_1, B_7]$ angeregt werden.

8. Meßverfahren nach Anspruch 6, bei dem die Linien P19 der Bande $[X_0, B_4]$ und P21 der Bande $[X_1, B_7]$ angeregt werden.

9. Meßverfahren nach Anspruch 8, bei dem die Frequenz des Lasergenerators auf die Mitte der Linie P21 der Bande $[X_1, B_7]$ eingestellt wird.

10. Meßverfahren nach einem der Ansprüche 6 bis 9, bei dem die Fluoreszenzintensitäten mit einer Wellenlänge von mehr als 240 nm gemessen werden.

11. Meßverfahren nach Anspruch 10, bei dem die Fluoreszenz der Fluoreszenzbanden $[B_4, X_8]$ und $[B_7, X_9]$ mit den jeweiligen Wellenlängen 249 nm und 247 nm gemessen werden.

12. Meßverfahren nach Anspruch 5, bei dem die Absorptionslinien R25 der Bande $[X_0, B_3]$ und R9 der Bande $[X_1, B_5]$ angeregt werden.

13. Meßverfahren nach einem der Ansprüche 1 bis 12, bei dem die Temperatur der Luft vor einem Luftfahrzeug in einem Luftabschnitt ohne aerodynamische Störungen bestimmt wird und daraus Flugparameter des Luftfahrzeugs abgeleitet werden, die man für dessen Steuerung verwendet.

14. Meßsystem zur Durchführung des Verfahrens eines der Ansprüche 1 bis 13, umfassend einen Lasergenerator (1), der eine Strahlung von sehr feiner Linie aussendet, um zwei Absorptionslinien (R, R') anzuregen, die sich zumindest überdecken und die jeweils zu zwei verschiedenen Schumann-Runge-Banden des Sauerstoffs gehören, wobei die Mittenfrequenz

$$\left(\frac{\omega_0}{2\pi}\right)$$

der Emissionslinie des Lasergenerators so eingestellt ist, daß sie im wesentlichen in der Nähe der Maxima der zwei Absorptionslinien (R, R') liegt, eine Optik (2, 3) zur Aussendung der Anregungsstrahlung, eine Optik (5, 7, 8) zum Empfang der Fluoreszenzstrahlung, Mittel (9) zur Trennung der beiden Fluoreszenzenergien, Detektoren (10, 11), die jeweils auf die Fluoreszenzfrequenzen abgestimmt sind, und einen Modul (16) zur Verarbeitung und Berechnung.

15. System nach Anspruch 14, bei dem der Lasergenerator (1) ein ArF-Excimerlasergenerator ist, der ein monochromatisches paralleles Bündel von sehr feiner Linie, angeordnet um eine Wellenlänge von im wesentlichen 193 nm, aussendet.

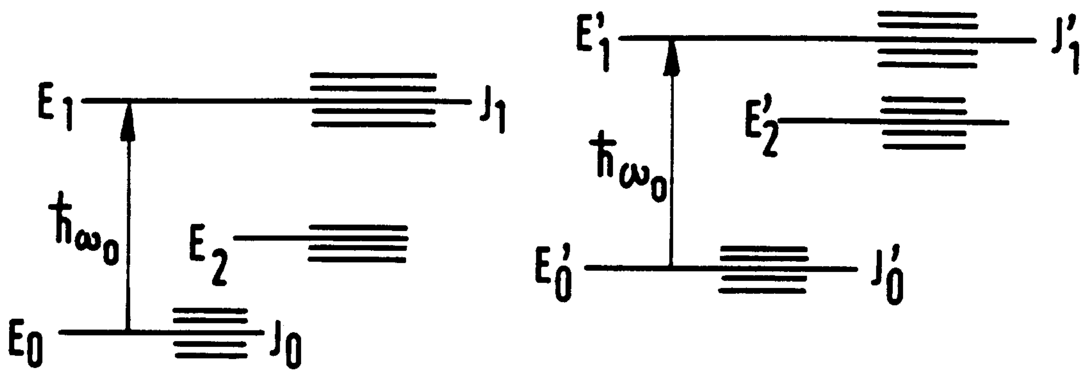


FIG.1

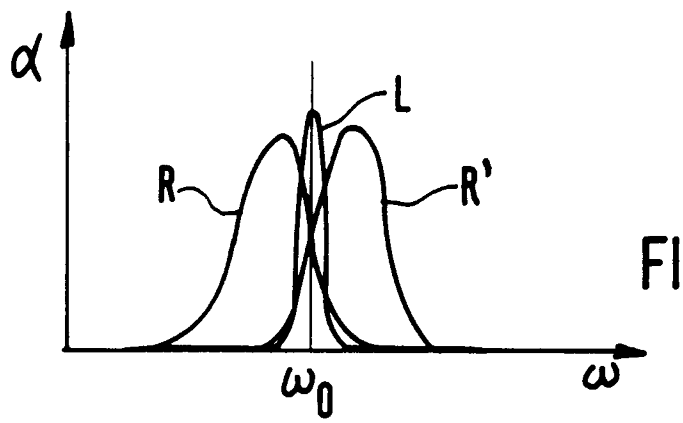


FIG.2

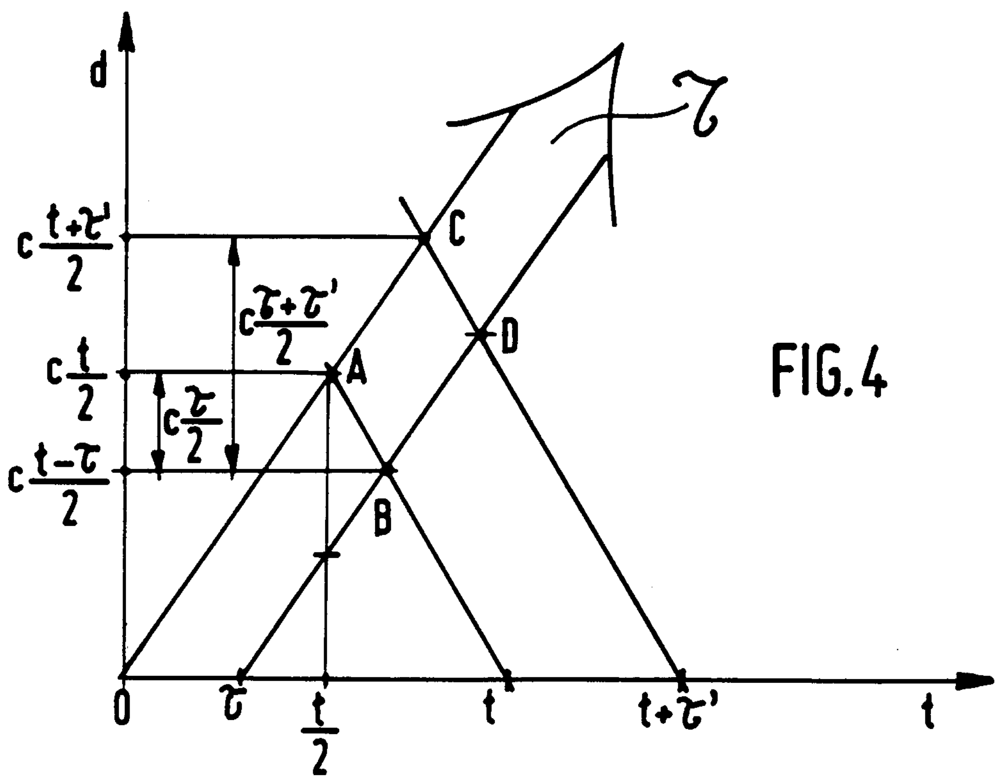


FIG.4

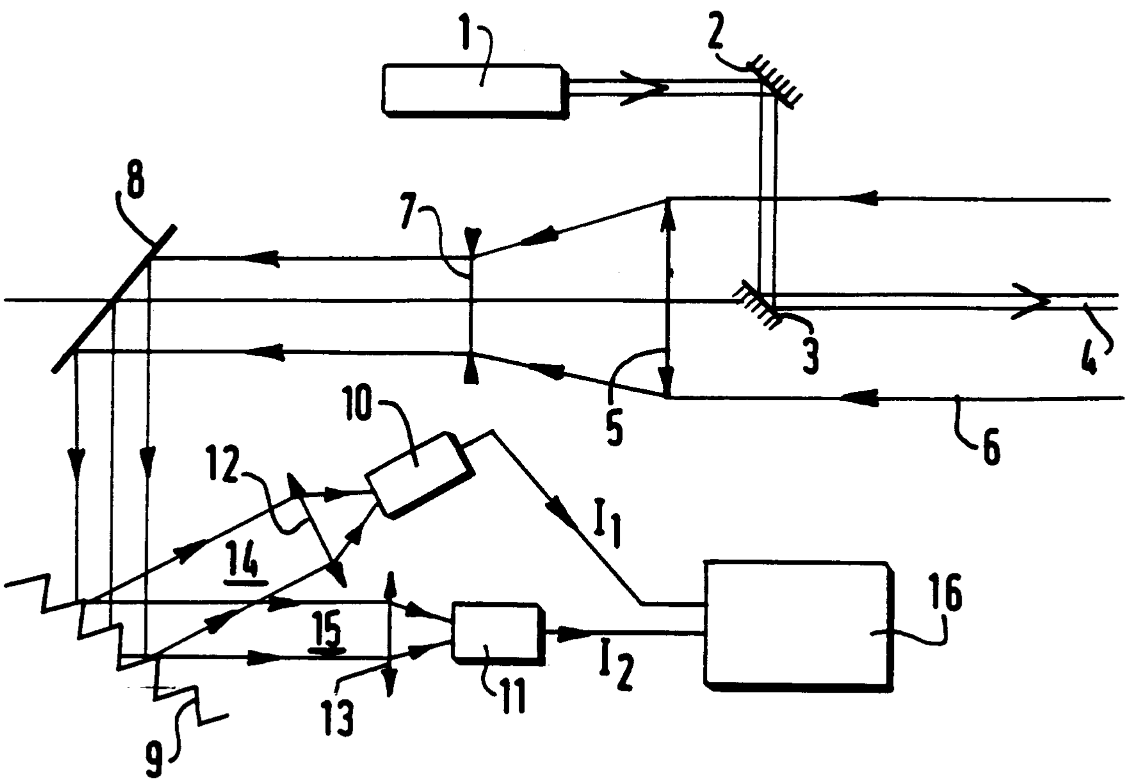
1
2
8
7
3
4
5
6
10
12
14
I1
15
16
13
11
I2
9

FIG.3

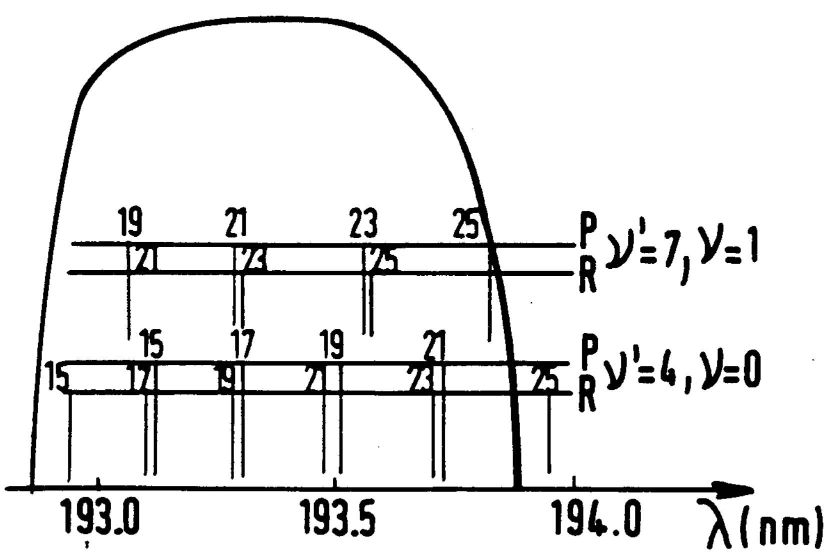
19
21
23
25
P
R
ν'=7, ν=1
21
23
25
15
17
19
21
P
R
ν'=4, ν=0
15
17
19
21
23
25
193.0
193.5
194.0
λ(nm)

FIG.5